# EUROPÄISCHE PATENTSCHRIFT

(11) **EP 0 858 365 B1**
(45) Veröffentlichungstag und Bekanntmachung des Hinweises auf die Patenterteilung: **24.03.1999**
(21) Anmeldenummer: 96934177.5
(22) Anmeldetag: 30.10.1996
(51) Int. Cl.: B01J 8/00, C21B 13/00, F27B 15/12

(54) **VERFAHREN ZUM RÜCKFÜHREN EINES AUS EINEM REAKTORGEFÄSS MIT EINEM GAS AUSGETRAGENEN FEINTEILIGEN FESTSTOFFES**
METHOD OF RETURNING A FINELY-DIVIDED SOLID EXTRACTED FROM A REACTOR VESSEL USING A GAS
PROCEDE DE RENVOI D'UN SOLIDE A FINES PARTICULES EXTRAIT D'UNE CUVE DE REACTEUR PAR UN GAZ DE TRANSPORT

(30) Priorität: 02.11.1995 AT 1812/95
(43) Veröffentlichungstag der Anmeldung: 19.08.1998
(73) Patentinhaber: DEUTSCHE VOEST-ALPINE INDUSTRIEANLAGENBAU GMBH, 40219 Düsseldorf (DE)
(72) Erfinder: NAGL, Michael, A-4204 Reichenau (AT); SCHENK, Johannes, A-4040 Linz (AT); STOCKINGER, Josef, A-4060 Leonding (AT)
(74) Vertreter: Kopecky, Helmut, Dipl.-Ing. Kopecky & Schwarz Patentanwälte
(86) Internationale Anmeldenummer: AT9600209
(87) Internationale Veröffentlichungsnummer: WO9716244

(56) Entgegenhaltungen:
- EP-A- 0 493 752
- EP-A- 0 599 760
- EP-B- 0 245 268
- EP-B- 0 278 287
- US-A- 5 110 323

## Beschreibung

Die Erfindung betrifft ein Verfahren zum Rückführen eines aus einem Reaktorgefäß insbesondere aus einem Einschmelzvergaser, mittels eines Gases bei einer Austragsstelle des Reaktorgefäßes ausgetragenen feinteiligen Feststoffes, wie Kohlestaub, an einer Rückführstelle des Reaktorgefäßes, wobei der Feststoff in einem Feststoff-Abscheider, insbesondere einem Zyklon, abgeschieden, anschließend in einem Sammelgefäß gesammelt und aus diesem mittels eines Fördergases unter Aufrechterhaltung eines Druckunterschiedes zwischen dem Feststoff-Abscheider und der Rückführstelle in das Reaktorgefäß rückgeführt wird, sowie eine Einrichtung zur Durchführung des Verfahrens.

Aus der EP-A - 0 493 752 ist es bekannt, heiße Stäube aus einem Vergasungsreaktor, wie einem Einschmelzvergaser, in einem Zyklon abzuscheiden und zur Überwindung einer Druckdifferenz zwischen dem Zyklon und dem Vergaser über ein Schleusensystem zurückzuführen, u.zw. über einen Brenner. Das bekannte Schleusensystem erfordert einen hohen konstruktiven Aufwand, wobei die mechanisch arbeitenden Schleusen zudem einem großen Verschleiß durch die staubförmigen Feststoffe ausgesetzt sind.

Aus der EP-B - 0 278 287 ist ein Verfahren der eingangs beschriebenen Art bekannt. Hierbei wird der nach dem Trennen vom aus dem Reaktorgefäß abgeleiteten Abgas im Feststoff-Abscheider anfallende Feststoff in einem Sammelbehälter gesammelt, wobei zwischen dem Abscheider, der als Zyklon ausgebildet ist, und dem Sammelbehälter der Druck durch eine im Abstand vom Abscheider erfolgende Gasabsaugung auf ein Niveau gesenkt wird, das gleich ist dem tiefsten Druck im Feststoff-Abscheider oder gegebenenfalls sogar tiefer liegt als dieser Druck. Dieses Verfahren hat zwar den Vorteil, daß der aus dem Feststoff-Abscheider kommende Feststoff ungehindert in den Sammelbehälter fließen kann, da zwischen dem Feststoff-Abscheider und dem Sammelbehälter keine die Bewegung der Feststoffteilchen hemmende, aufwärts gerichtete Gasströmung existiert, weist jedoch den Nachteil auf, daß durch den Unterdruck Abgas aus dem Reaktorgefäß durch den Zyklon hindurchtritt und gemeinsam mit dem rückgeführten Feststoff wiederum in dasselbe rückgeführt wird, so daß im Reaktorgefäß ablaufende Prozesse gestört werden oder zumindest infolge der Rückführung bereits verbrauchter Gase weniger effizient ablaufen.

Aus der EP-B - 0 245 268 ist es bekannt, die aus einem Reaktorgefäß austretenden Rauchgase einem Zyklonabscheider zuzuleiten, von dem dann abgeschiedene Feststoffteilchen wiederum in das Reaktorgefäß rückgeführt werden. Ein Teil der Feststoffteilchen wird zusammen mit Rauchgas aus dem Zyklonabscheider durch Saugen getrennt vom übrigen Teil der Feststoffteilchen ausgetragen und in das Reaktorgefäß getrennt rückgeführt. Auch hierbei kommt es neben der Rückführung der Feststoffteilchen zu einer Rückführung eines beträchtlichen Teiles des Rauchgases in den Reaktor, was wiederum den Gasdurchsatz durch den Reaktor mit für die im Reaktor stattfindenden Reaktionen wirkungslosen Gasanteilen erhöht und zu einer geringeren Effizienz der im Reaktor ablaufenden Prozesse führt.

Die Erfindung bezweckt die Vermeidung dieser Nachteile und Schwierigkeiten und stellt sich die Aufgabe, die Arbeitsweise des Feststoff-Abscheiders zu verbessern und den Feststoff in einem stabilen Förderzustand in den Reaktor zurückzuführen, wobei einerseits eine zusätzliche Belastung des Reaktorgefäßes durch im Reaktor bei diversen Umsetzungsprozessen bereits verbrauchtes Reaktorabgas oder andererseits, falls im Reaktor ein bestimmtes Produktgas erzeugt werden soll, ein Produktionsverlust an Produktgas vermieden werden soll.

Diese Aufgabe wird bei einem Verfahren der eingangs beschriebenen Art erfindungsgemäß dadurch gelöst, daß durch den Feststoff-Abscheider in Flußrichtung des Feststoffes ein vom Gasstrom im Reaktorgefäß unabhängiger Zusatzgasstrom im Kreislauf hindurchgeleitet wird.

Durch den Zusatzgasstrom - der nur durch den Feststoff-Abscheider hindurchgeführt wird und nach Durchtritt durch den Feststoff-Abscheider im Austrittsbereich der Feststoffe aus dem Feststoff-Abscheider ausgeschieden und dem Eintrittsbereich der Feststoffe in den Feststoff-Abscheider wiederum zugeleitet wird - gelingt es einerseits, daß durch den Feststoff-Abscheider kein Gas im Gegenstrom zum Feststoffdurchtritt strömt und so die im FeststoffAbscheider stattfindenden Abscheidevorgänge behindern kann, und andererseits, den Abscheidewirkungsgrad dadurch zu verbessern, daß eine kleine in Feststoffströmungsrichtung gerichtete Gasströmung vorhanden ist, wobei jedoch eine Rückführung von aus dem Reaktorgefäß dem Feststoff-Abscheider zugeführtem Gas in das Reaktorgefäß mit Sicherheit vermieden wird.

Vorzugsweise wird der Zusatzgasstrom mittels eines Druckgases nach dem Injektorprinzip erzeugt, wobei zweckmäßig im Austrittsbereich des Feststoffes aus dem Feststoff-Abscheider Gas für den Zusatzgasstrom abgesaugt und dieses Gas mit dem Druckgas dem Feststoff-Abscheider direkt, d.h. auf kurzem Weg, zusammen mit dem mit Feststoff beladenen Gas, das aus dem Reaktorgefäß stammt, zugeleitet wird.

Gemäß einer bevorzugten Ausführungsform wird im Austrittsbereich des Feststoff-Abscheiders eine Beruhigung der Teilchen des Feststoffes in einem Beruhigungsraum vorgenommen und das Gas für den Zusatzgasstrom aus dem Beruhigungsraum weitgehend frei von Feststoffteilchen abgesaugt, wodurch es gelingt, die Feststoffe nahezu vollständig abzuscheiden und nicht etwa durch den Zusatzgasstrom abermals durch den Feststoff-Abscheider hindurchzuleiten.

Zum Ausgleich des Druckverlustes auf dem Weg von der Austragstelle bis zur Rückführstelle in das Reaktorgefäß wird zweckmäßig in dem Sammelgefäß zum Sammeln des abgeschiedenen Feststoffes ein Wirbelbett aufrecht erhalten, wobei vorteilhaft der frisch zugeführte Feststoff in das Wirbelbett in einem unteren Bereich desselben - nach der Art eines Siphones - eingebracht wird.

Vorzugsweise wird der im Feststoff-Abscheider abgeschiedene Feststoff in das Reaktorgefäß über einen Brenner eingebracht, wobei zweckmäßig die Asche des Feststoffes durch Verbrennen des Feststoffes agglomeriert wird. Hierdurch gelingt es, daß die rückgeführten Feststoffe nicht abermals mittels der aus dem Reaktorgefäß ausströmenden Gase aus demselben ausgetragen werden. Die agglomerierten Ascheteilchen werden durch die im Reaktorgefäß hochströmenden Gase nicht mehr so leicht mitgerissen, sondern sie sinken zum Boden des Reaktorgefäßes und können dort entnommen werden, beispielsweise im aufgeschmolzenen Zustand oder eingebunden in eine Schlacke.

Vorteilhaft wird der Feststoff vom Wirbelbett mit einem Fördergas dem Brenner zugeleitet. Hierdurch gelingt es, den rückzuführenden Feststoff mit dem Fördergas und dem das Wirbelbett bildenden Fluidisierungsgas in eine stabile Gas-/Feststoff-Suspension, die sich leicht fördern läßt, überzuführen. Dadurch wird der Brenner gleichmäßig mit Feststoff beschickt, wobei eine hohe Fördergeschwindigkeit bei nennenswertem Druckverlust erreichbar ist. Dies ist insoferne von Vorteil, als Druckschwankungen im Reaktorgefäß den Förderzustand kaum beeinflussen.

Eine Einrichtung zur Durchführung des erfindungsgemäßen Verfahrens mit einem Reaktorgefäß, insbesondere einem Einschmelzvergaser, einer vom Reaktorgefäß ausgehenden Gasableitung, die zu einem Feststoff-Abscheider, insbesondere einem Zyklon, führt, von dem eine den abgeschiedenen Feststoff zu einem Sammelgefäß führende Feststoff-Ableitung führt, und mit einer von dem Sammelgefäß ausgehenden und in das Reaktorgefäß mündenden Feststoff-Rückführleitung, ist dadurch gekennzeichnet, daß eine Gaskreislaufleitung zum Feststoff-Abscheider parallelgeschaltet ist, die mit einem Gasinjektor versehen ist, der aus dem Feststoff-Abscheider Gas absaugt und in den Feststoff-Abscheider rückführt, u.zw. in Strömungsrichtung des Feststoffes im Feststoff-Abscheider.

Zur Vermeidung des Rückführens von Feststoffteilchen in den Feststoff-Abscheider mittels des Zusatzgasstromes weist vorteilhaft ein Austrittsbereich des Feststoffes aus dem Feststoff-Abscheider einen Beruhigungsraum auf, in den eine Feststoff-Austrittsleitung des Feststoff-Abscheiders mündet, wobei die Mündung im Inneren des Beruhigungsraumes angeordnet ist, und geht ein Gasabsaugteil der Gaskreislaufleitung im Abstand oberhalb der Mündung vom Beruhigungsraum aus.

Zur Überwindung des Druckverlustes auf dem Weg von der Austragstelle bis zur Rückführstelle in das Reaktorgefäß münden vorteilhaft in das Sammelgefäß eine ein Wirbelbett im Sammelgefäß erzeugende Druckgasleitung und im unteren Bereich des Wirbelbettes die vom Feststoff-Abscheider ausgehende Feststoff-Ableitung.

Gemäß einer bevorzugten Ausführungsform ist das Sammelgefäß am Boden mit einer mittels eines Absperrorganes absperrbaren Bodenöffnung versehen, die in einen Ausschleusbehälter leitet, wobei der Boden des Sammelgefäßes sich von oben nach unten zu der Bodenöffnung kegelförmig verjüngend ausgebildet ist. Dies dient dazu, grobe Teilchen, wie z.B. von der Feuerfestauskleidung des Feststoff-Abscheiders abgeplatzte Teilchen, während des Betriebes aus dem Sammelgefäß auszuschleusen, so daß das Wirbelbett im Sammelgefäß ungestört aufrecht erhalten werden kann und die Feststoffrückführung nicht unterbrochen werden muß.

Vorteilhaft ist die Feststoff-Rückführleitung mit einer Fördergaszumischungseinrichtung versehen, wobei zweckmäßig die Feststoff-Rückführleitung an der in das Reaktorgefäß führenden Mündung mit einem Brenner versehen ist.

Eine bevorzugte Ausführungsform ist dadurch gekennzeichnet, daß das Sammelgefäß zwei unterschiedlich lange, rohrförmige vertikale Gefäßteile aufweist, die im Nahbereich ihrer unteren Enden miteinander leitungsmäßig verbunden sind, wobei zweckmäßig an den unteren Endbereichen der Gefäßteile jeweils eine Gaszuführungsleitung für ein Fluidisierungsgas einmündet.

Vorzugsweise sind die Leerrohrgeschwindigkeiten in den Gefäßteilen unterschiedlich. Hierdurch kann den in den unterschiedlich langen rohrförmigen vertikalen Gefäßteilen enthaltenen unterschiedlich hohen Wirbelbetten - in der technischen Ausführung kann die unterschiedliche Höhe bis zu einigen Metern betragen - vorteilhaft Rechnung getragen werden. Die Wirbelschichten werden mit unterschiedlichen Leerrohrgeschwindigkeiten und damit unterschiedlichen Gasmengen betrieben.

Hierbei ist vorteilhaft das Sammelgefäß H-förmig ausgebildet, wobei die vertikalen Gefäßteile durch einen horizontalen Gefäßteil verbunden sind.

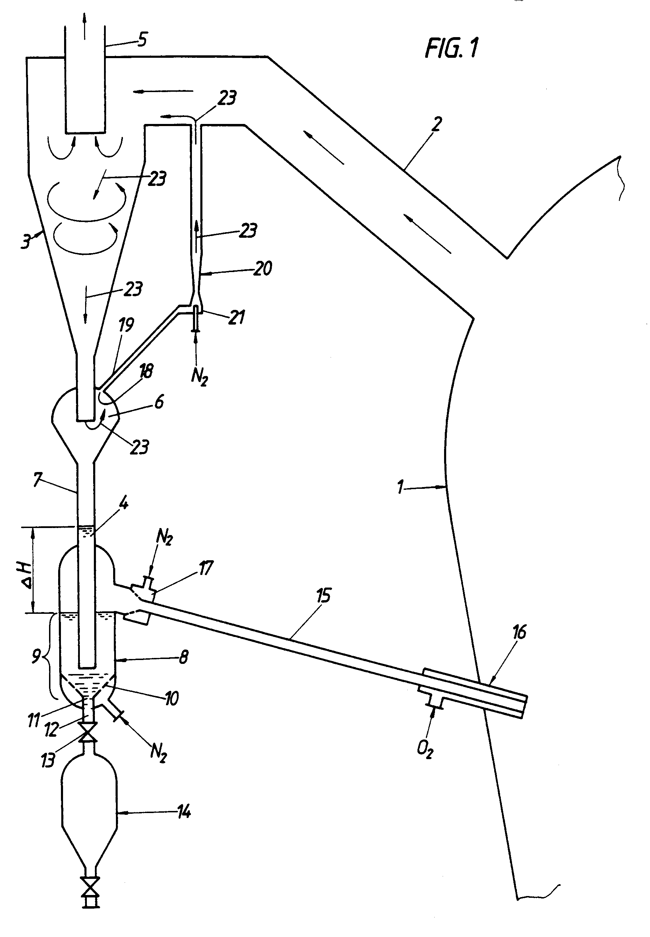

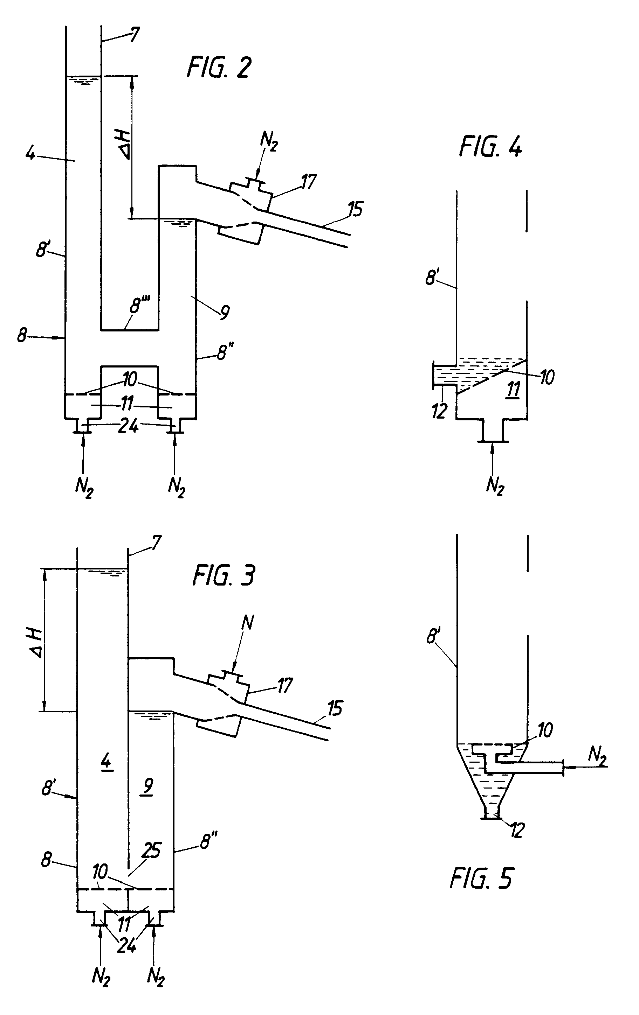

Die Erfindung ist nachfolgend anhand mehrerer in der Zeichnung dargestellter Ausführungsbeispiele näher erläutert, wobei Fig. 1 eine Gesamtdarstellung einer erfindungsgemäßen Einrichtung zur Durchführung des erfindungsgemäßen Verfahrens nach einer ersten Ausführungsform in schematischer Darstellung veranschaulicht. Die Fig. 2 bis 5 zeigen ein Detail der Fig. 1 in jeweils abgewandelter Ausführungsform.

Aus einem zum Einschmelzen von Eisenschwamm bei gleichzeitiger Erzeugung eines Reduktionsgases aus kohlenstoffhältigem Material dienenden Einschmelzvergaser 1 wird das durch Kohlevergasung entstehende, nachfolgend als Reduktionsgas eingesetzte Abgas über eine Gasableitung 2, die in einem oberen Bereich des Einschmelzvergasers 1 in diesen einmündet, abgeleitet. Da mit dem Abgas feinkörniger bis staubförmiger Feststoff mitgerissen wird, wird das Abgas einem Feststoff-Abscheider 3, der vorteilhaft als Zyklon ausgebildet ist, zugeführt. Die im Zyklon 3 sich abscheidenden Feststoffe 4 sinken nach unten, wogegen das Abgas über die vom Zyklon 3 ausgehende Ableitung 5 nach oben abgeführt wird.

Der abgeschiedene Feststoff 4 (hauptsächlich Kohleteilchen, jedoch auch Eisenteilchen bzw. eisenhältige Teilchen) gelangt vom Zyklon 3 in einen Beruhigungsraum 6, der den Austrittsbereich des Feststoffes aus dem Zyklon 3 gemäß dem dargestellten Ausführungsbeispiel birnenförmig umgibt. Die sich absetzenden Feststoffteilchen sinken über eine vom Beruhigungsraum weiterführende Feststoffableitung 7 nach unten und gelangen so in ein siphonartig ausgebildetes Sammelgefäß 8. In diesem wird ein Wirbelbett 9 durch Zuleitung eines Fluidisierungsgases, beispielsweise Stickstoff, aufrecht erhalten. Der Boden 10 des Sammelgefäßes ist sich nach unten kegelförmig verjüngend ausgebildet und weist eine Vielzahl von Öffnungen auf, durch die das Fluidisierungsgas in zur Wirbelbildung notwendiger Menge und Geschwindigkeit nach oben strömen kann.

Die kegelförmige Verjüngung des Bodens 10 endet in einer zentralen Austrittsöffnung 11, an die ein Abführrohr 12 mit Absperrventil 13 anschließt. Dieses Abführrohr 12 mündet in einen Ausschleusbehälter 14. Diese Anordnung dient dazu, besonders grobe Teilchen, beispielsweise aus dem Zyklon 3 abgeplatzte Teile der feuerfesten Auskleidung, aus dem Sammelgefäß 8 auszufördern, so daß die Ausbildung des Wirbelbettes 9 im Sammelgefäß 8 nicht beeinträchtigt wird.

Vom Sammelgefäß 8 führt eine Feststoff-Rückführleitung 15 in den Einschmelzvergaser 1, wobei die Einmündung der Feststoff-Rückführleitung 15 in den Einschmelzvergaser 1 als Brenner 16, beispielsweise als Sauerstoffbrenner, ausgebildet ist. Um eine gleichmäßige Förderung der sich im Sammelgefäß 8 sammelnden Feststoffteilchen zum Brenner 16 zu bewirken, werden die Teilchen durch ein am Beginn der Feststoff-Rückführleitung 15 mittels einer Fördergaszumischungseinrichtung 17 zugeleitetes Fördergas durch die Feststoff-Rückführleitung 15 gefördert. Als Fördergas kommt hier ebenfalls Stickstoff in Frage.

Im oberen Bereich des Beruhigungsraumes 6 ist eine Einmündung 18 eines Gasabsaugteiles 19 einer Gaskreislaufleitung 20 vorgesehen, die über einen Gasinjektor 21 - dieser wird vorteilhaft ebenfalls mit Stickstoff betrieben - wiederum in die das Abgas aus dem Einschmelzvergaser 1 zum Zyklon 3 führende Gasableitung 2 mündet. Hierdurch wird ein Zusatzgasstrom - veranschaulicht durch die Pfeile 23 - durch den Zyklon 3 aufrecht erhalten, der verhindert, daß Fluidisierungs- bzw. Fördergas aus dem Sammelgefäß 8 durch den Zyklon 3 aufsteigt und dort die Abscheidung der Feststoffteilchen behindert. Dieser Zusatzgasstrom bewirkt eine im Zyklon 3 abwärts gerichtete Gasströmung, durch die der Abscheide-Wirkungsgrad des Zyklons 3 verbessert wird.

Wie aus der Zeichnung ersichtlich, besteht ein Niveauunterschied ΔH zwischen dem sich im Sammelgefäß 8 bildenden Wirbelbett 9 und den über die Feststoff-Ableitung 7 diesem zugeleiteten und sich stauenden Feststoffteilchen, der den Druckverlust zwischen dem Zyklon 3 und der Rückführstelle, d.h. dem Brenner 16, ausgleicht.

Die Rückführung der Feststoffteilchen über einen Brenner 16 ist besonders vorteilhaft, da es hierdurch gelingt, die brennbaren Feststoffteilchen energiemäßig zu nutzen und die hierbei entstehende Asche zu agglomerieren, beispielsweise durch die im abgeschiedenen Feststoff enthaltenen eisenhältigen Teilchen. Die so agglomerierte Asche sinkt im Einschmelzvergaser 1 ab und wird aufgeschmolzen oder in Schlacke eingebunden. Ein neuerliches Austragen der im Zyklon 3 abgeschiedenen und rückgeführten Feststoffteilchen aus dem Einschmelzvergaser 1 wird hierdurch vermieden.

Die Fig. 2 bis 5 zeigen unterschiedliche Ausbildungen von Sammelgefäßen 8, die in besonders vorteilhafter Weise die Einhaltung eines Niveauunterschiedes ΔH ermöglichen. Gemäß Fig. 2 ist das Sammelgefäß 8 H-förmig ausgebildet, wobei die vertikalen Gefäßteile 8', 8'', die durch einen horizontalen Gefäßteil 8''' verbunden sind, entsprechend dem Niveauunterschied ΔH unterschiedliche Längen aufweisen. Jeder der beiden vertikalen Gefäßteile 8', 8'' ist an seinem unteren Ende mit einer eigenen Gaszuleitung 24 für ein Fluidisierungsgas, wie Stickstoff, zur Bildung eines Wirbelbetts 9 versehen. Der horizontal gerichtete Gefäßteil 8''' ist nahe den unteren Enden der vertikal gerichteten Gefäßteile 8' und 8'' angeordnet.

Da die Höhe des Wirbelbetts 9 in den Gefäßteilen 8', 8'' stark unterschiedlich hoch ist - in der technischen Ausführung kann das ΔH einige Meter betragen -, ist es für die Fluidisierung vorteilhaft, in jedem der Gefäßteile 8', 8'' Wirbelschichten mit unterschiedlichen Leerrohrgeschwindigkeiten und damit mit unterschiedlichen Gasmengen zu betreiben.

Gemäß der in Fig. 3 dargestellten Ausführungsform sind die vertikalen Gefäßteile 8', 8'' unmittelbar benachbart angeordnet, und es ist im Bodenbereich, in dem ein Lochboden 10 für die Gaszuleitung vorgesehen ist, eine Verbindungsöffnung 25 vorgesehen.

In den Fig. 4 und 5 sind Ausführungsformen für die Bodenbereichsteile der vertikalen Gefäßteile 8', 8'' veranschaulicht, bei denen die Gaszuführung für das Fluidisierungsgas jeweils derart ausgestaltet ist, daß grobe Teilchen, die nicht fluidisierbar sind, aus dem Sammelgefäß 8 ausgefördert werden können.

Der Boden 10 kann als Siebboden, Düsenboden oder als Spülstein ausgeführt sein.

Die Erfindung beschränkt sich nicht auf das beschriebene Ausführungsbeispiel, sondern kann in verschiedener Hinsicht modifiziert werden. Insbesondere ist sie für Reaktorgefäße jeder Art, bei denen es zu einem Feststoffaustrag mit einem Abgas kommt - also nicht nur für Einschmelzvergaser - anwendbar.

## Patentansprüche

1. Verfahren zum Rückführen eines aus einem Reaktorgefäß (1), insbesondere aus einem Einschmelzvergaser, mittels eines Gases bei einer Austragsstelle des Reaktorgefäßes (1) ausgetragenen feinteiligen Feststoffes (4), wie Kohlestaub, an einer Rückführstelle (16) des Reaktorgefäßes (1), wobei der Feststoff (4) in einem Feststoff-Abscheider (3), insbesondere einem Zyklon, abgeschieden, anschließend in einem Sammelgefäß (8) gesammelt und aus diesem mittels eines Fördergases unter Aufrechterhaltung eines Druckunterschiedes zwischen dem Feststoff-Abscheider (3) und der Rückführstelle (16) in das Reaktorgefäß (1) rückgeführt wird, dadurch gekennzeichnet, daß durch den Feststoff-Abscheider (3) in Flußrichtung des Feststoffes (4) ein vom Gasstrom im Reaktorgefäß unabhängiger Zusatzgasstrom (23) im Kreislauf hindurchgeleitet wird.

2. Verfahren nach Anspruch 1, dadurch gekennzeichnet, daß der Zusatzgasstrom (23) mittels eines Druckgases nach dem Injektorprinzip erzeugt wird.

3. Verfahren nach Anspruch 2, dadurch gekennzeichnet, daß im Austrittsbereich (6) des Feststoffes (4) aus dem Feststoff-Abscheider (3) Gas für den Zusatzgasstrom (23) abgesaugt und dieses Gas mit dem Druckgas dem Feststoff-Abscheider (3) direkt, d.h. auf kurzem Weg, zusammen mit dem mit Feststoff beladenen Gas, das aus dem Reaktorgefäß (1) stammt, zugeleitet wird.

4. Verfahren nach Anspruch 3, dadurch gekennzeichnet, daß im Austrittsbereich des Feststoff-Abscheiders (3) eine Beruhigung der Teilchen des Feststoffes (4) in einem Beruhigungsraum (6) vorgenommen wird und daß das Gas für den Zusatzgasstrom (23) aus dem Beruhigungsraum (6) weitgehend frei von Feststoffteilchen abgesaugt wird.

5. Verfahren nach einem oder mehreren der Ansprüche 1 bis 4, dadurch gekennzeichnet, daß in dem Sammelgefäß (8) zum Sammeln des abgeschiedenen Feststoffes ein Wirbelbett (9) aufrecht erhalten wird, wobei vorteilhaft der frisch zugeführte Feststoff (4) in das Wirbelbett (9) in einem unteren Bereich desselben - nach der Art eines Siphones - eingebracht wird.

6. Verfahren nach einem oder mehreren der Ansprüche 1 bis 5, dadurch gekennzeichnet, daß der im Feststoff-Abscheider (3) abgeschiedene Feststoff (4) in das Reaktorgefäß (1) über einen Brenner (16) eingebracht wird.

7. Verfahren nach Anspruch 6, dadurch gekennzeichnet, däß die Asche des Feststoffes (4) durch Verbrennen des Feststoffes (4) agglomeriert wird.

8. Verfahren nach Anspruch 5 und 6 oder 7, dadurch gekennzeichnet, daß der Feststoff (4) vom Wirbelbett (9) mit einem Fördergas nach dem Injektorprinzip dem Brenner (16) zugeleitet wird.

9. Einrichtung zur Durchführung des Verfahrens nach einem oder mehreren der Ansprüche 1 bis 8, mit einem Reaktorgefäß (1), insbesondere einem Einschmelzvergaser, einer vom Reaktorgefäß ausgehenden Gasableitung (2), die zu einem Feststoff-Abscheider (3), insbesondere einem Zyklon, führt, von dem eine den abgeschiedenen Feststoff (4) zu einem Sammelgefäß (8) führende Feststoff-Ableitung (7) führt, und mit einer von dem Sammelgefäß (8) ausgehenden und in das Reaktorgefäß (1) mündenden Feststoff-Rückführleitung (15), dadurch gekennzeichnet, daß eine Gaskreislaufleitung (20) zum Feststoff-Abscheider (3) parallelgeschaltet ist, die mit einem Gasinjektor (21) versehen ist, der aus dem Feststoff-Abscheider (3) Gas absaugt und in den Feststoff-Abscheider (3) rückführt, u.zw. in Strömungsrichtung des Feststoffes (4) im Feststoff-Abscheider (3).

10. Einrichtung nach Anspruch 9, dadurch gekennzeichnet, daß ein Austrittsbereich des Feststoffes (4) aus dem Feststoff-Abscheider (3) einen Beruhigungsraum (6) aufweist, in den eine Feststoff-Austrittsleitung des Feststoff-Abscheiders (3) mündet, wobei die Mündung im Inneren des Beruhigungsraumes (6) angeordnet ist, und daß ein Gasabsaugteil (19) der Gaskreislaufleitung (20) im Abstand oberhalb der Mündung vom Beruhigungsraum (6) ausgeht.

11. Einrichtung nach Anspruch 9 oder 10, dadurch gekennzeichnet, daß in das Sammelgefäß (8) eine ein Wirbelbett (9) im Sammelgefäß (8) erzeugende Druckgasleitung und im unteren Bereich des Wirbelbettes (9) die vom Feststoff-Abscheider (3) ausgehende Feststoff-Ableitung (7) münden.

12. Einrichtung nach Anspruch 11, dadurch gekennzeichnet, daß das Sammelgefäß (8) am Boden (10) mit einer mittels eines Absperrorganes (13) absperrbaren Bodenöffnung (11) versehen ist, die in einen Ausschleusbehälter (14) leitet, wobei der Boden (10) des Sammelgefäßes (8) sich von oben nach unten zu der Bodenöffnung (11) kegelförmig verjüngend ausgebildet ist.

13. Einrichtung nach einem oder mehreren der Ansprüche 9 bis 12, dadurch gekennzeichnet, daß die Feststoff-Rückführleitung (15) mit einem Gasinjektor (bei 17) versehen ist.

14. Einrichtung nach einem oder mehreren der Ansprüche 9 bis 13, dadurch gekennzeichnet, daß die Feststoff-Rückführleitung (15) an der in das Reaktorgefäß (1) führenden Mündung mit einem Brenner (16) versehen ist.

15. Einrichtung nach einem oder mehreren der Ansprüche 9 bis 14, dadurch gekennzeichnet, daß das Sammelgefäß (8) zwei unterschiedlich lange, rohrförmige vertikale Gefäßteile (8', 8'') aufweist, die im Nahbereich ihrer unteren Enden miteinander leitungsmäßig verbunden sind (Fig. 2 bis 5).

16. Einrichtung nach Anspruch 15, dadurch gekennzeichnet, daß an den unteren Endbereichen der Gefäßteile (8', 8'') jeweils eine Gaszuführungsleitung für ein Fluidisierungsgas einmündet.

17. Einrichtung nach Anspruch 16, dadurch gekennzeichnet, daß die Leerrohrgeschwindigkeiten in den Gefäßteilen (8', 8'') unterschiedlich sind.

18. Einrichtung nach einem oder mehreren der Ansprüche 15 bis 17, dadurch gekennzeichnet, daß das Sammelgefäß (8) H-förmig ausgebildet ist, wobei die vertikalen Gefäßteile (8', 8'') durch einen horizontalen Gefäßteil (8''') verbunden sind (Fig. 2)

## Claims

1. A process for recycling fine-particle solids (4), such as coal dust, discharged from a reactor vessel (1), particularly from a melter gasifier, at a discharging position of the reactor vessel (1) by means of a gas, at a recycling position (16) of the reactor vessel (1), wherein the solids (4) are separated in a solids separator (3), particularly a cyclone, subsequently collected in a collecting vessel (8) and from the same are recycled into the reactor vessel (1) by means of a conveying gas while maintaining a difference in pressure between the solids separator (3) and the recycling position (16), characterized in that an additional gas stream (23) independent of the gas stream in the reactor vessel is conducted through the solids separator (3) in a circuit, in the direction of flow of the solids (4).

2. A process according to claim 1, characterized in that the additional gas stream (23) is produced by means of a pressure gas according to the injector principle.

3. A process according to claim 2, characterized in that in the exit area (6) of the solids (4) from the solids separator (3) gas for the additional gas stream (23) is sucked off and this gas together with the pressure gas is supplied to the solids separator (3) directly, i.e. by a short route, along with the gas that originates in the reactor vessel (1) and is loaded with solids.

4. A process according to claim 3, characterized in that in the exit area of the solids separator (3) calming of the particles of the solid matter (4) is effected in a calming space (6) and that the gas for the additional gas stream (23) is sucked out of the calming space (6) to a large extent free from solid particles.

5. A process according to one or several of claims 1 to 4, characterized in that in the collecting vessel (8) that serves for collecting the separated solids a fluidized bed (9) is maintained, wherein advantageously the freshly supplied solids (4) are charged into the fluidized bed (9) in a lower area of the same - in the fashion of a siphon.

6. A process according to one or several of claims 1 to 5, characterized in that the solids (4) separated in the solids separator (3) are charged into the reactor vessel (1) via a burner (16).

7. A process according to claim 6, characterized in that the ash of the solids (4) is agglomerated by combusting the solids (4).

8. A process according to claim 5 and 6 or 7, characterized in that from the fluidized bed (9) the solids (4) are conducted to the burner (16) by a conveying gas according to the injector principle.

9. An arrangement for carrying out the process according to one or several of claims 1 to 8, comprising a reactor vessel (1), particularly a melter gasifier, a gas discharge duct (2) departing from the reactor vessel and leading to a solids separator (3), particularly a cyclone, from which a solids discharge duct (7) conducting the separated solids (4) to a collecting vessel (8) departs, and comprising a solids recycling duct (15) that departs from the collecting vessel (8) and opens into the reactor vessel (1), characterized in that a gas circulating duct (20) is connected in parallel with the solids separator (3) and is provided with a gas injector (21) that sucks off gas from the solids separator (3) and conducts it back into the solids separator (3), namely in the direction of flow of the solids (4) in the solids separator (3).

10. An arrangement according to claim 9, characterized in that an exit area of the solids (4) from the solids separator (3) is provided with a calming space (6) into which a solids discharge duct of the solids separator (3) opens, the mouth being arranged in the interior of the calming space (6), and that a gas suction unit (19) of the gas circulating duct (20) departs from the calming space (6) at a distance above the mouth.

11. An arrangement according to claim 9 or 10, characterized in that into the collecting vessel (8) there opens a pressure gas duct producing a fluidized bed (9) within the collecting vessel (8) and the solids discharge duct (7) departing from the solids separator (3) opens into the lower area of the fluidized bed (9).

12. An arrangement according to claim 11, characterized in that the collecting vessel (8) is at its bottom (10) provided with a bottom opening (11) that can be shut off by means of a shut-off device (13) and conducts into a sluicing-out vessel (14), with the bottom (10) of the collecting vessel (8) being constructed such as to taper downward conically from the top toward the bottom opening (11).

13. An arrangement according to one or several of claims 9 to 12, characterized in that the solids recycling duct (15) is provided with a gas injector (at 17).

14. An arrangement according to one or several of claims 9 to 13, characterized in that the solids recycling duct (15) is provided with a burner (16) at the mouth leading into the reactor vessel (1).

15. An arrangement according to one or several of claims 9 to 14, characterized in that the collecting vessel (8) is provided with two tube-shaped vertical vessel parts (8', 8'') of different lengths, which in the vicinity of their lower ends are flow-connected with each other (Figs. 2 to 5).

16. An arrangement according to claim 15, characterized in that at the lower end regions of the vessel parts (8', 8'') there ends one gas feed duct each for a fluidizing gas.

17. An arrangement according to claim 16, characterized in that the superficial velocities in the vessel parts (8', 8'') are different.

18. An arrangement according to one or several of claims 15 to 17, characterized in that the collecting vessel (8) is constructed in the shape of an H, with the vertical vessel parts (8', 8'') being connected by a horizontal vessel part (8''') (Fig. 2).

## Revendications

1. Procédé de renvoi d'un solide (4) en fines particules, comme de la poussière de charbon, extrait d'une cuve de réacteur (1), en particulier d'un gazéificateur de fusion, au moyen d'un gaz opérant dans un ajutage d'extraction de la cuve du réacteur (1), sur un ajutage de renvoi (16) de la cuve du réacteur (1), cependant que le solide (4) est séparé dans un séparateur de solide (3), en particulier dans un cyclone, ensuite recueilli dans un bac collecteur (8) et renvoyé de celui-ci dans la cuve du réacteur au moyen d'un gaz de transport, tout en maintenant une différence de pression entre le séparateur de solides (3) et l'ajutage de renvoi (16), caractérisé en ce qu'un courant gazeux supplémentaire (23), indépendant du courant gazeux se trouvant dans la cuve du réacteur, est introduit par le séparateur de solides (3) dans le circuit dans la direction du flux du solide (4).

2. Procédé selon la revendication 1, caractérisé en ce que le courant gazeux supplémentaire (23) est produit au moyen d'un gaz de pressurisation selon le principe injecteur.

3. Procédé selon la revendication 2, caractérisé en ce que dans l'étage de sortie (6) du matériau solide (4) du séparateur de solides (3), le gaz destiné à fournir le courant gazeux supplémentaire (23) est aspiré, et que ce gaz est amené directement, c'est-à-dire en empruntant un trajet qui soit court, par le gaz de pressurisation au séparateur de solides (3), avec le gaz chargé du matériau solide provenant de la cuve du réacteur (1).

4. Procédé selon la revendication 3, caractérisé en ce que, dans l'étage de sortie du séparateur de solides (3), une tranquillisation des particules du matériau solide (4) est effectuée dans une chambre de tranquillisation (6), et que le gaz destiné à fournir le courant gazeux supplémentaire (23) est aspiré de la chambre de tranquillisation (6) tout en étant largement débarrassé des particules solides.

5. Procédé selon une ou plusieurs des revendications 1 à 4, caractérisé en ce qu'un lit fluidisé (9) est maintenu dans le bac collecteur (8) pour recueillir le matériau solide séparé, cependant que le matériau solide (4) fraîchement amené dans le lit fluidisé (9) est avantageusement déposé dans un étage inférieur dudit lit - à la manière d'un siphon.

6. Procédé selon une ou plusieurs des revendications 1 à 5, caractérisé en ce que le matériau solide (4) séparé dans le séparateur de solides (3) est déposé dans la cuve du réacteur (1) via un brûleur (16).

7. Procédé selon la revendication 6, caractérisé en ce que la cendre du matériau solide (4) est agglomérée par la combustion du matériau solide (4).

8. Procédé selon la revendication 5 et 6 ou 7, caractérisé en ce que le matériau solide (4) est amené du lit fluidisé (9) au brûleur (16) à l'aide d'un gaz de transport selon le principe injecteur.

9. Dispositif pour la réalisation du procédé selon une ou plusieurs des revendications 1 à 8, avec une cuve de réacteur (1), en particulier avec un gazéificateur de fusion, une canalisation de gaz (2) partant de la cuve du réacteur, canalisation qui conduit à un séparateur de solides (3), en particulier à un cyclone, d'où conduit une canalisation pour solides amenant le matériau solide séparé (4) à un bac collecteur (8), ainsi qu'avec une conduite de renvoi pour solides (15) partant du bac collecteur (8) et débouchant dans la cuve du réacteur (1), caractérisé en ce qu'une conduite de recyclage du gaz (20) est mise en parallèle avec le séparateur de solides (3), conduite qui est pourvue d'un injecteur de gaz (21) qui aspire du gaz du séparateur de solides (3) et le renvoie dans le séparateur de solides (3), à savoir dans le sens du courant du matériau solide (4) dans le séparateur de solides (3).

10. Dispositif selon la revendication 9, caractérisé en ce qu'un étage de sortie du matériau solide (4) provenant du séparateur de solides (3) présente une chambre de tranquillisation (6), dans laquelle débouche un étage de sortie pour solides du séparateur de solides (3), cependant que la bonde est aménagée à l'intérieur de la chambre de tranquillisation (6), et qu'à distance, au-dessus de la bonde de la chambre de tranquillisation (6), sort un organe d'aspiration du gaz (19) de la conduite de recyclage du gaz (20).

11. Dispositif selon la revendication 9 ou 10, caractérisé en ce qu'une conduite de gaz de pressurisation produisant un lit fluidisé (9) dans le bac collecteur (8) ainsi que la canalisation pour solides (7) provenant du séparateur de solides (3) à l'étage inférieur du lit fluidisé (9) débouchent dans le bac collecteur (8).

12. Dispositif selon la revendication 11, caractérisé en ce que le bac collecteur (8) est pourvu en son fond (10) d'un orifice de fond (11) obturable au moyen d'un obturateur (13), orifice qui conduit à un récipient d'éjection par sassement (14) , cependant que le fond (10) du bac collecteur (8) est configuré en forme de cône se rétrécissant du haut vers le bas à l'orifice du fond (11).

13. Dispositif selon une ou plusieurs des revendications 9 à 12, caractérisé en ce que la conduite de renvoi pour solides (15) est pourvue d'un injecteur de gaz (en 17).

14. Dispositif selon une ou plusieurs des revendications 9 à 13, caractérisé en ce que la conduite de renvoi pour solides (15) est pourvue d'un brûleur (16) sur la bonde menant à la cuve du réacteur (1).

15. Dispositif selon une ou plusieurs des revendications 9 à 14, caractérisé en ce que le bac collecteur (8) présente deux pièces de cuve de longueur différente, tubulaires et verticales (8', 8''), qui sont reliées l'une à l'autre en canalisation à proximité de leurs extrémités inférieures (Fig. 2 à 5).

16. Dispositif selon la revendication 15 caractérisé en ce qu'aux étages des extrémités inférieures des pièces de cuve (8', 8''), débouche pour chacune d'elles une canalisation de conduite de gaz pour un gaz de fluidisation.

17. Dispositif selon la revendication 16, caractérisé en ce que les vitesses d'écoulement tubulaire sont différentes dans les pièces de la cuve (8', 8'').

18. Dispositif selon une ou plusieurs des revendications 15 à 17, caractérisé en ce que le bac collecteur (8) est configuré en forme de H, cependant que les pièces verticales de la cuve (8', 8'') sont reliées par une pièce de cuve (8''') horizontale (Fig. 2).
